# EUROPÄISCHE PATENTSCHRIFT

(11) **EP 0 592 912 B1**
(45) Veröffentlichungstag und Bekanntmachung des Hinweises auf die Patenterteilung: **17.07.1996**
(21) Anmeldenummer: 93115986.7
(22) Anmeldetag: 04.10.1993
(51) Int. Cl.: C08F 297/04

(54) **Verfahren zur Herstellung von Blockcopolymeren durch ionische Polymerisation**
Process for producing block copolymers by ionic polymerisation
Procédé de fabrication de copolymères blocs par polymérisation ionique

(30) Priorität: 14.10.1992 DE 4234601
(43) Veröffentlichungstag der Anmeldung: 20.04.1994
(73) Patentinhaber: BASF Aktiengesellschaft, D-67063 Ludwigshafen (DE)
(72) Erfinder: Brandstetter, Franz, Dr., D-67435 Neustadt (DE); Gausepohl, Hermann, Dr., D-67112 Mutterstadt (DE); Thiele, Reiner, D-67663 Kaiserslautern (DE)

(56) Entgegenhaltungen:
- DE-A- 2 111 966
- CHEMICAL ABSTRACTS, vol. 105, no. 4, 28. Juli 1986, Columbus, Ohio, US; abstract no. 25611z, SHIRAKI TOSHINORI 'block copolymers' Seite 70 ;Spalte 1 ;

## Beschreibung

Die Erfindung betrifft ein Verfahren zur Herstellung von Blockcopolymeren durch anionische Polymerisation in Rohrreaktoren.

Die Herstellung von Blockcopolymeren aus anionisch polymerisierbaren Monomeren ist hinlänglich bekannt. Sie wird im allgemeinen absatzweise im Rührkessel vorgenommen, wie es beispielsweise in den deutschen Patentschriften 13 01 496 und 25 50 227 beschrieben ist.

Um Polymerblöcke mit sog. scharfen Übergängen zu erhalten, müssen die einzelnen Monomeren streng sequentiell, d.h. jeweils ein Monomeres muß vollständig umgesetzt sein, bevor das weitere Monomere zugesetzt werden kann. Im Prinzip gilt dies auch für sog. verschmierte Übergänge, wenn sie kontrolliert bleiben sollen, d.h. nach dem Übergang schließlich wieder ein rein homopolymerer Block erhalten werden soll. Es werden dabei nur Polymerlösungen mit niedriger Konzentration erhalten, da andernfalls durch die Polymerisation die Temperatur so hoch ansteigt, daß ein thermischer Abbruch der Polymerkette eintritt. All dies führt zu einer sehr schlechten Raumzeitausbeute.

In der DE-A-21 11 966 wird die Herstellung von Blockcopolymeren in einer Reaktorkaskade beschrieben. Die Raumzeitausbeute kann bei diesem Verfahren zwar günstiger sein, wenn man auf vollständige Polymerisation in den einzelnen Reaktionszonen verzichtet, dann erhält man aber nur Polymere mit Bereichen mit statistischer bzw. weitgehend statistischer Monomerverteilung, also sog. verschmierten Übergängen.

Aufgabe der Erfindung ist es deshalb, Blockcopolymere des Styrols oder seiner Äquivalente einerseits und von Butadien oder seiner Äquivalente andererseits durch sequentielle anionische Polymerisation, vorzugsweise mit sog. scharfen Übergängen bei hoher Raumzeitausbeute herzustellen, wobei zunächst ein erstes Monomeres und die als Starter dienende metallorganische Verbindung zu einem Reaktionsgemisch vereinigt werden und die Umsetzung bis zum mindestens teilweisen Verbrauch des ersten Monomeren fortgeführt und sodann mindestens ein weiteres Monomeres zugesetzt und jeweils teilweise oder vollständig umgesetzt wird. Unter Raumzeitausbeute wird dabei die Ausbeute an gebildetem Polymer verstanden, bezogen auf das effektiv vorhandene Reaktorvolumen und bezogen auf die Zeit, die vergeht vom Eintritt der Monomeren und Hilfsstoffe in den Reaktor bis zum Austritt der Polymerlösung aus dem Reaktor.

Die Aufgabe wird erfindungsgemäß dadurch gelöst, daß man die Polymerisation In an sich bekannter Weise kontinuierlich in einem Rohrreaktor durchgeführt, wobei die Umsetzung jeweils eines Monomeren in jeweils einem Reaktorabschnitt vorgenommen wird und mindestens zwei Reaktorabschnitte durch eine Mischstrecke getrennt sind.

Für die Herstellung z.B.eines Dreiblocks A-B-A sind somit drei aufeinanderfolgende Reaktionszonen oder Rohrstrecken erforderlich. Dabei wird der ersten Reaktionszone ein Gemisch aus einem inerten und von protonenaktiven Substanzen befreiten Lösungsmittel und dem Monomer A sowie separat der Initiator zugeführt. Der zweiten Reaktionszone wird das Monomer B zugeführt und in die dritte Zone wird wiederum das Monomere A eingespeist. Auf die erste und zweite Reaktionszone folgt jeweils eine Mischstrecke; sowohl die Reaktionszonen wie die Mischstrecken können gekühlt werden. Die Reaktionszonen sind so dimensioniert, daß das zuletzt zugeführte Monomere jeweils vollständig polymerisiert, bevor das Reaktionsgemisch die nächste Zone erreicht. Man erhält dadurch Blockcopolymere mit sog. scharfen Übergängen zwischen den Blöcken. Verschmierte Übergänge lassen sich erreichen, wenn man die Umsetzung in den einzelnen Reaktionszonen nicht vollständig führt, zeit- bzw. abschnittsweise Gemische von Monomeren zuläßt, oder wenn man geringe Mengen polarer Verbindungen, wie z.B. Tetrahydrofuran zusetzt.

Wie bei anionischen Polymerisationsverfahren üblich, bestimmt das Verhältnis von Initiatormenge zur Monomermenge die Blocklänge im Polymeren. I. a. wird die gesamte Initiatormenge einem Mischelement vor der ersten Reaktionszone zugeführt. Man kann aber auch die Dosierung des Initiators auf mehrere Reaktionszonen verteilen und erhält dadurch Blockcopolymergemische unterschiedlicher Blocklängen.

Die Polymerisation soll zweckmäßigerweise bei Temperaturen zwischen 20 und 150°C und bevorzugt zwischen 35 und 120°C ablaufen.

Als Äquivalente des Styrols kommen z.B., α-Methylstyrol, Vinyltoluol oder tert.-Butylstyrol in Frage. Als Äquivalente des Butadiens sind Dimethylbutadien und Isopren in Betracht zu ziehen.

Als Lösungsmittel können inerte Kohlenwasserstoffe eingesetzt werden. Geeignete Verbindungen sind aliphatische, cycloaliphatische oder aromatische Kohlenwasserstoffe, die unter Reaktionsbedingungen flüssig sind und vier bis 12 Kohlenwasserstoffatome enthalten.

Beispiele hierfür sind Pentan, Cyclohexan, Methylcyclohexan, Toluol, Ethylbenzol oder Xylol.

Geeignete Initiatoren für die Polymerisation sind die bekannten Monolithiumkohlenwasserstoffe der allgemeinen Formel RLi, worin R einen aliphatischen, cycloaliphatischen, aromatischen oder gemischt aromatisch-aliphatischen Kohlenwasserstoffrest darstellt. Der Kohlenwasserstoffrest kann 1 bis 12 Kohlenwasserstoffatome besitzen. Als Beispiele für die beschriebenen Initiatoren seien genannt: Methyllithium, Ethyllithium, n- oder sec-Butyllithium, Isopropyl-Cyclohexyl oder Phenyllithium. Besonders bevorzugt sind n- oder sec-Butyllithium.

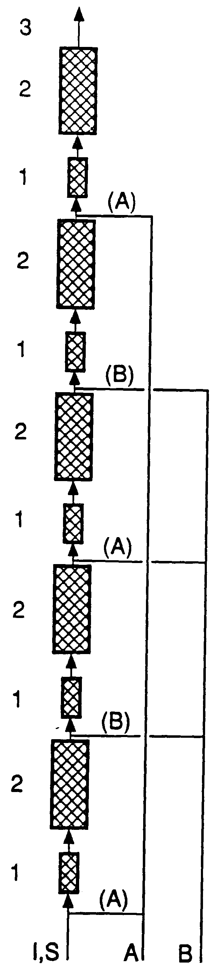

Eine geeignete Vorrichtung zur Durchführung des erfindungsgemäßen Verfahrens ist in der Figur wiedergegeben und besteht aus einer Reihe von Segmenten (1, 2), welches jedes für sich eine Mischstrecke 1 und einen Rohrreaktor 2 aufweist, wobei (1) eine Verweilzone, d.h. einen statischen Mischer darstellt. Als Mischer geeignet sind z.B. handelsübliche starre Einbauten, Füllkörper oder Folgen einfacher Lochplatten, deren Löcher jeweils versetzt angeordnet sind. Die verschiedenen Monomeren - hier sind zwei Monomere A und B angedeutet - werden jeweils getrennt zugeführt.

Das erfindungsgemäße Verfahren eignet sich sowohl für die Herstellung von Thermoplasten - insbesondere auf Basis von Styrol und Butadien - als auch für die Herstellung von thermoplastischen Elastomeren, wobei anstelle der linearen Blockstruktur auch sternförmig aufgebaute Polymere erhalten werden können, wenn die lebenden Kettenenden nach Abschluß der Polymerisation in einer weiteren Reaktionszone - bestehend z. B. aus einem statischen Mischer - in bekannter Weise mit einer multifunktionellen Verbindung gekoppelt und dann abgebrochen werden.

Als solche eignen sich beispielsweise Divinylbenzol, Siliciumtetrachlorid, di- oder trifunktionelle Ester, Aldehyde, Ketone und multifunktionelle Epoxide wie z.B. unter der Handelsbezeichnung Edenol^{®} B 316 oder B 81 der Firma Henkel erhältliche Produkte.

Nach beendeter Polymerisation bzw. Kopplung werden die Reaktionsprodukte mit einer protonenaktiven Substanz behandelt wie beispielsweise einem Alkohol oder einem Gemisch aus CO₂ und Wasser. Schließlich werden die Polymerlösungen in üblicher Weise von Lösungsmittel befreit und nach Bedarf mit Stabilisatoren, Antioxidantien, Gleitmitteln usw. versetzt.

### Beispiel 1

### Herstellung eines SBS-Blockcopolymeren

Zur Vorführung der Erfindung wird eine Vorrichtung aus insgesamt vier Segmenten verwendet. Jedes Segment enthält einen Rohrreaktor mit einem Durchmesser von 5 cm und einer Länge von 800 cm, der sog. SMR-Elemente eingebaut enthält. Jedem Segment außer dem letzten ist ein statischer Mischer mit sog. SMX-Elementen nachgeschaltet. Jedes Rohrsegment weist eine Dosiervorrichtung für Monomere auf. Das erste Segment enthält zusätzlich eine Vorrichtung für die Initiatorlösung. Die vorgenannten Einbauten und ihre Wirkungsweise sind z.B. in entsprechenden Druckschriften des Herstellers Sulzer AG, Winthertur, Schweiz beschrieben.

Frisch destilliertes Styrol und Methylcyclohexan, die zuvor über Al₂O₃ getrocknet worden waren, wurden im Verhältnis 1:6 gemischt und mit einer Geschwindigkeit von 127 kg/h dem ersten Rohrsegment zugeführt. Gleichzeitig wurde eine 12%ige Lösung von sec-Butyllithium in Methylcyclohexan mit einer Geschwindigkeit von 0,12 kg/h zudosiert. Dem zweiten und dritten Rohrsegment wurden je 3,8 kg/h Butadien zugeführt, das über Molekularsieb getrocknet und vom Stabilisator befreit worden war. In den vierten Reaktor wurde wiederum Styrol mit einer Geschwindigkeit von 9,6 kg/h eingespeist. Die mittleren Polymerisationstemperaturen in den Reaktoren lagen in der Reihenfolge des Polymerflusses bei 65°C, 75°C, 75°C und 90°C.

Die Polymerlösung am Ende des letzten Reaktors wurde gesammelt, mit CO₂ und Wasser behandelt und anschließend vom Lösungsmittel befreit.

Das Molekulargewicht der Blöcke mit SBS-Polymer betrug für S₁: 82 000 g/mol, für B: 34 000 g/mol und für S₂: 43 000 g/mol.

Die Raumzeitausbeute betrug: 0,50 kg/l·h

### Beispiel 2

Der Versuch nach Beispiel 1 wurde wiederholt, wobei am dritten Segment 5,0 kg/h Styrol anstelle von Butadien und am vierten Segment Edenol B 316 von Henkel anstelle von Styrol zudosiert wurden.

Die Raumzeitausbeute betrug: 0,58 kg/l·h

Das mittlere Molekulargewicht lag bei 245 000 mol/g und die Kopplungsausbeute (= Verhältnis von gekoppeltem zu nicht gekoppeltem Material) lag bei 72 %.

### Beispiel 3

Wie in Beispiel 1 beschrieben wurde unter entsprechender Abänderung der Vorschrift ein Blockcopolymer B₁SB₂ mit den Molekulargewichten für B₁ 63 000 mol/g, B₂ 22 000 mol/g und S 84 000 mol/g hergestellt.

Die Raumzeitausbeute betrug: 0,4 kg/l·h

## Patentansprüche

1. Verfahren zur Herstellung von Blockcopolymeren des Styrols oder seiner Äquivalente einerseits und von Butadien oder seiner Äquivalente andererseits durch sequentielle anionische Polymerisation, wobei zunächst ein erstes Monomeres und die als Starter dienende metallorganische Verbindung zu einem Reaktionsgemisch vereinigt werden und die Umsetzung bis zum mindestens teilweisen Verbrauch des ersten Monomeren fortgeführt und sodann mindestens ein weiteres Monomeres zugesetzt und jeweils teilweise oder vollständig umgesetzt wird, dadurch gekennzeichnet, daß man die Umsetzung (Polymerisation) in an sich bekannter Weise kontinuierlich in einem Rohrreaktor durchführt, wobei die Umsetzung jeweils eines Monomeren in jeweils einem Reaktorabschnitt vorgenommen wird und mindestens zwei Reaktorabschnitte durch eine Mischstrecke getrennt sind.

2. Verfahren nach Anspruch 1, dadurch gekennzeichnet, daß die Einspeisung des den zweiten oder weitere Polymerblöcke bildenden Monomeren in Strömungsrichtung jeweils vor einer Mischstrecke vorgenommen wird.

3. Verfahren nach Anspruch 1, dadurch gekennzeichnet, daß mindestens ein Rohrreaktor mindestens in seinem - in Strömungsrichtung - vorderen oder hinteren Teil als Mischstrecke ausgebildet ist.

4. Verfahren nach Anspruch 1, dadurch gekennzeichnet, daß die Mischstrecke als Rührkessel ausgebildet ist, mit der Maßgabe, daß die Verweilzeit bzw. das Rührkesselvolumen klein ist gegenüber der Bemessung des jeweils folgenden Rohrreaktors.

5. Verfahren nach Anspruch 1, dadurch gekennzeichnet, daß die Gemischtemperatur an keiner Stelle eines Rohrreaktors 150°C überschreitet.

6. Verfahren nach Anspruch 1, dadurch gekennzeichnet, daß mindestens ein Rohrreaktor durchgehend statisch mischende Einbauten und mindestens teilweise Kühlflächen aufweist.

7. Verfahren nach Anspruch 1, dadurch gekennzeichnet, daß man jeweils eine Teilmenge der genannten Initiatormenge dem Eingang des Rohrreaktors und weitere Teilmengen wenigstens einem weiteren Reaktorabschnitt zuführt.

8. Vorrichtung zur Durchführung des Verfahrens nach Anspruch 1, bestehend aus mindestens zwei aufeinanderfolgenden Reaktionsrohren, mindestens einer Mischstrecke, die zwischen den Rohren angeordnet ist, und Mitteln zur getrennten Einspeisung von mindestens 2 Monomeren.

9. Vorrichtung nach Anspruch 8, enthaltend mindestens eine Rohrstrecke, die mindestens teilweise als Mischstrecke ausgebildet ist, die im wesentlichen rückvermischungsfrei bzw. nur radial-mischend wirkt.

## Claims

1. A process for preparing block copolymers of styrene or its equivalents on the one hand and of butadiene or its equivalents on the other hand by sequential anionic polymerization, in which initially a first monomer and the organometallic compound serving as initiator are combined to form a reaction mixture and the reaction is continued until at least part of the first monomer has been consumed, and then at least one further monomer is added and is in each case partially or completely reacted, characterized in that the reaction (polymerization) is carried out continuously in a conventional manner in a tubular reactor, the reaction of in each case one monomer being carried out in each case in one reactor section and at least two reactor sections being separated by a mixing stretch.

2. A process as claimed in claim 1, characterized in that the feeding in of the monomer forming the second or further polymer blocks is carried out in each case upstream of a mixing stretch.

3. A process as claimed in claim 1, characterized in that at least one tubular reactor is configured, at least at its upstream or downstream end, as a mixing stretch.

4. A process as claimed in claim 1, characterized in that the mixing stretch is configured as a stirred vessel, with the proviso that the residence time and/or the stirred vessel volume is small compared to the dimensions of the in each case following tubular reactor.

5. A process as claimed in claim 1, characterized in that the mixing temperature does not exceed 150°C at any point of a tubular reactor.

6. A process as claimed in claim 1, characterized in that at least one tubular reactor has continuously statically mixing internal fittings and at least in some places cooling surfaces.

7. A process as claimed in claim 1, characterized in that in each case part of the aforementioned amount of initiator is fed to the inlet of the tubular reactor and further parts are fed at least to one further reactor section.

8. Apparatus for carrying out the process as claimed in claim 1, comprising at least two reaction tubes connected in series, at least one mixing stretch arranged between the tubes, and means for the separate feeding in of at least two monomers.

9. Apparatus as claimed in claim 8, including at least one tubular stretch that is configured at least partly as a mixing stretch, which acts essentially free from backmixing or only in a radially mixing manner.

## Revendications

1. Procédé pour la fabrication de copolymères blocs du styrène ou de ses équivalents d'une part, et de butadiène ou de ses équivalents d'autre part, par polymérisation anionique séquentielle, dans lequel on combine d'abord un premier monomère et le composé organométallique servant d'initiateur pour obtenir un mélange réactionnel, et on poursuit la mise en réaction jusqu'à une consommation au moins partielle du premier monomère, puis on ajoute au moins un monomère supplémentaire que l'on fait réagir respectivement de manière partielle ou complète, caractérisé en ce qu'on effectue la mise en réaction (polymérisation) d'une manière connue en soi en continu dans un réacteur tubulaire, en procédant à la mise en réaction de respectivement un monomère dans respectivement une section du réacteur, au moins deux sections du réacteur étant séparées par un tronçon de mélange.

2. Procédé selon la revendication 1, caractérisé en ce qu'on procède à l'alimentation du monomère formant la deuxième séquence ou des séquences ultérieures du polymère dans la direction d'écoulement respectivement avant un tronçon de mélange.

3. Procédé selon la revendication 1, caractérisé en ce qu'au moins un réacteur tubulaire est réalisé sous forme d'un tronçon de mélange au moins dans sa partie antérieure ou postérieure - dans le sens de l'écoulement -.

4. Procédé selon la revendication 1, caractérisé en ce que le tronçon de mélange est réalisé sous forme d'une cuve d'agitation, avec cette mesure que le temps de séjour, respectivement le volume de la cuve d'agitation, est petit par rapport à la dimension du réacteur tubulaire qui suit respectivement.

5. Procédé selon la revendication 1, caractérisé en ce que la température du mélange ne dépasse pas 150°C à aucun endroit d'un réacteur tubulaire.

6. Procédé selon la revendication 1, caractérisé en ce qu'au moins un réacteur tubulaire présente, sans interruption, des structures internes procurant un mélange statique et, au moins de manière partielle, des surfaces de refroidissement.

7. Procédé selon la revendication 1, caractérisé en ce qu'on achemine respectivement une fraction de la quantité d'initiateur mentionnée à l'entrée du réacteur tubulaire et des fractions supplémentaires au moins dans une section de réacteur supplémentaire.

8. Dispositif pour la mise en oeuvre du procédé selon la revendication 1, constitué par au moins deux tubes réactionnels successifs, par au moins un tronçon de mélange qui est disposé entre les tubes et par des moyens pour l'alimentation séparée d'au moins 2 monomères.

9. Dispositif selon la revendication 8, comprenant au moins un tronçon tubulaire qui est réalisé au moins partiellement sous forme de tronçon de mélange qui fonctionne de manière à être essentiellement exempt de remélange, respectivement en ne procurant qu'un mélange radial.
